# EUROPEAN PATENT APPLICATION

(11) **EP 4 548 748 A1**
(43) Date of publication of application: **07.05.2025**
(21) Application number: 23830716.9
(22) Date of filing: 17.02.2023
(51) Int. Cl.: A01G 7/00, A01G 27/02, A01G 31/00

(54) **PLANT CULTIVATION SYSTEM AND CULTIVATION METHOD**

(30) Priority: 01.07.2022 JP 2022106899
(71) Applicant: Mebiol Inc., Hiratsuka-shi Kanagawa 254-0075 (JP)
(72) Inventor: YOSHIOKA, Hiroshi, Hadano-shi, Kanagawa 257-0026 (JP)
(74) Representative: Hoffmann Eitle
(86) International application number: PCT/JP2023/005670
(87) International publication number: WO 2024/004260

(57) **Abstract**

With all the conventional measures, namely, conventional horticultural management techniques (such as fertilizers in soil cultivation and hydroponic cultivation), selection of soil, temperature in the growth environment, intensity and quality of horticultural lighting, photoperiodic cycle, and drought treatment during the reproductive growth period of a plant, the increase in the inflorescence dry weight of the plant and in the content of secondary metabolites in the inflorescence has been limited.

The present invention uses a plant cultivation system wherein at least a part of the roots of a plant adheres to one surface of a hydrophilic film, a nutrient fluid is disposed to be in contact with the other surface of the hydrophilic film opposite to the film surface to which the plant roots adhere, and a switching between the vegetative growth period and reproductive growth period of the plant is performed by changing the light period.

The cultivation system and cultivation method of the present invention makes it possible to promote growth of inflorescences in which secondary metabolites are accumulated, and therefore can be used in the fields of agriculture and the manufacture of pharmaceuticals.

## Description

### Field of the Invention

The present invention relates to a plant cultivation system suitable for the cultivation of short-day plants or long-day plants each having photoperiodism. More particularly, the present invention is concerned with a cultivation system suitable for the cultivation of, for example, cannabis plants, which produce cannabinoids useful for medical applications and the like.

### Prior Art

As plant phenomena dependent on photoperiodism, flower bud formation, stem elongation, dormancy, defoliation, and the like are known, and flower bud formation has been especially well studied. Plants include short-day plants, which form flower buds, leading to flowering when the day length becomes short, long-day plants, which flower when the day length becomes long, and neutral plants, which flower regardless of the day length.

Chrysanthemums, etc. form flower buds only when the day length becomes shorter than a specific time (short-day plants), and snapdragons, stocks, etc. form flower buds only when the day length becomes longer than a specific time (long-day plants). In order to suppress flower bud formation (i.e., reproductive growth) of a short-day plant to continue its vegetative growth, or in order to promote flowering of a long-day plant, electric lighting cultivation is performed in which a plant is lighted by an electric lamp for several hours at night. Further, in order to promote flowering of a short-day plant, or in order to suppress flower bud formation of a long-day plant to continue its vegetative growth, light-shielded cultivation is performed in which a plant is shielded from sunlight for several hours.

The essential oil from the inflorescence (flower spike) of the cannabis plant (*Cannabis sativa* L.) has been used for many years as pharmaceuticals useful for the treatment of various diseases and disorders. On the other hand, there is a history in which the cultivation of the cannabis plant was prohibited due to its psychoactivity and dependence, and the cultivators had to cultivate the plant based on the anecdotal information. However, in these 10 years, regulations on the cultivation and use of the cannabis plant, especially those on its use for medicinal purposes, have been liberalized in parts of North America and Europe, and research in this field has progressed.

The inflorescences of cannabis plant female flowers accumulate as secondary metabolites a variety of meroterpenoid compounds known as phytocannabinoids. Several cannabinoids, including tetrahydrocannabinol (THC) and cannabidiol (CBD), have been extensively studied for their psychoactive and medicinal properties (Non-Patent Document 1). In living plants, cannabinoids exist mainly as carboxylic acids, such as tetrahydrocannabinolic acid (THCA) and cannabidiolic acid (CBDA) (Non-Patent Document 2).

The increase in the inflorescence dry weight of the cannabis plant and in the cannabinoid content of the inflorescence of the cannabis plant has mainly depended on breeding and selection of chemical phenotypes. For the purpose of increasing the inflorescence dry weight of the cannabis plant and the cannabinoid content of the inflorescence of the cannabis plant, various efforts and attempts have been made, for example, gardening management techniques, such as fertilization (Non-Patent Document 3), selection of soil (Non-Patent Document 4), temperature in the growing environment (Non-Patent Document 5), intensity and quality of gardening lighting (Non-Patent Document 6), photoperiodic cycle (Non-Patent Document 7), and drought treatment during the reproductive growth period of the cannabis plant (Non-Patent Document 8).

The present inventor and his colleagues have long made various studies on nutrient fluid cultivation technology using a hydrophilic film, and have disclosed the following plant cultivation systems and plant cultivation methods: a plant cultivation device and a plant cultivation method both using a technology wherein a plant is cultivated on a nonporous hydrophilic film disposed in contact with a nutrient fluid while allowing the film to be integrated with the roots of the plant (Patent Document 1); a plant cultivation device and a plant cultivation method both using a technology wherein an irrigation is also performed from above the nonporous hydrophilic film (Patent Document 2); a plant cultivation system using a technology wherein the nonporous hydrophilic film is continuously transferred along and in contact with a nutrient fluid (Patent Document 3); a plant cultivation system using a technology wherein an evaporation suppression material is disposed, through a layer of air, above the nonporous hydrophilic film (Patent Document 4); a plant cultivation system using a technology wherein a nutrient fluid is continuously fed to the lower surface of the nonporous hydrophilic film (Patent Document 5); and a plant cultivation system using a specific polyvinyl alcohol (PVA) film as the nonporous hydrophilic film (Patent Document 6).

### Prior Art Documents

### Patent Documents

Patent Document 1: Japanese Patent Application Prior-to-Examination Publication (Saihyo) No. 2004-64499
Patent Document 2: Japanese Patent No. 4425244
Patent Document 3: Unexamined Japanese Patent Application Laid-Open Specification No. 2008-182909
Patent Document 4: Unexamined Japanese Patent Application Laid-Open Specification No. 2008-193980
Patent Document 5: Japanese Patent No. 4142725
Patent Document 6: Japanese Patent No. 5960102

### Non-Patent Documents

Non-Patent Document 1: Elzinga, S., J. Fischedick, R. Podkolinski, and J.C. Raber, "Cannabinoids and terpenes as chemotaxonomic markers in cannabis", Nat. Prod. Chem. Res., Vol. 3 (2015), pages 1-9
Non-Patent Document 2: Muntendam, R., N. Happyana, T. Erkelens, F., Bruining, and O. Kayser, "Time dependent metabolomics and transcriptional analysis of cannabinoid biosynthesis in Cannabis sativa var. Bedrobinol and Bediol grown under standardized condition and with genetic homogeneity", Online Intl. J. Med. Plants Res., Vol. 1 (2012), pages 31-40
Non-Patent Document 3 : Caplan, D., M. Dixon, and Y. Zheng, "Optimal rate of organic fertilizer during the flowering stage for cannabis grown in two coir-based substrates", HortScience, Vol. 52 (2017), page 17
Non-Patent Document 4 : Caplan, D., M. Dixon, and Y. Zheng, "Optimal rate of organic fertilizer during the vegetative stage for cannabis grown in two coir-based substrates", HortScience, Vol. 52 (2017), pages 1307-1312
Non-Patent Document 5 : Chandra, S., H. Lata, I.A. Khan, and M.A. Elsohly, "Temperature response of photosynthesis in different drug and fiber varieties of Cannabis sativa L.", Physiol. Mol. Biol. Plants, Vol. 17 (2011), pages 297-303
Non-Patent Document 6 : Potter, D.J. and P. Duncombe, "The effect of electrical lighting power and irradiance on indoor-grown cannabis potency and yield", J. Forensic Sci., Vol. 57 (2012), pages 618-622
Non-Patent Document 7 : Potter, D.J., "The propagation, characterisation and optimisation of Cannabis sativa L. as a phytopharmaceutical", King's College London, London, Doctoral Thesis, 2009
Non-Patent Document 8 : Caplan, D., M. Dixon, and Y. Zheng, "Increasing inflorescence dry weight and cannabinoid content in medical cannabis using controlled drought stress", HortScience, Vol. 54 (2019), pages 964-969

### Summary of the Invention

### Problems to Be Solved by the Invention

However, it has been considered that even if short-day plants or long-day plants each having photoperiodism, are cultivated using the plant cultivation systems described in the above-mentioned Patent Documents 1 to 6, it is difficult to increase the inflorescence dry weight of the plants and the contents of secondary metabolites in the inflorescence of the plants. The reasons are as follows. First, in the plant cultivation by any one of the above-described systems, it is considered that the vegetative growth of the plant is inhibited because water stress is applied to the plant not only in the reproductive growth period but also in the vegetative growth period. Further, in the cultivation of the short-day plant or long-day plant, it is considered that the photosynthesis is restricted and the growth of the plant is suppressed because the light period is shortened in the reproductive growth period or in the vegetative growth period. Therefore, it has been considered that even when the cultivation of the short-day plant or long-day plant for the purpose of increasing the inflorescence dry weight or the contents of the secondary metabolites in the inflorescence is performed using any one of the above-described systems, the purpose is not achieved.

In addition, with all the conventional measures described in Non-Patent Documents 1 to 8, namely, the conventional horticultural management techniques (such as fertilizers in soil cultivation and hydroponic cultivation), the selection of soil, the temperature in the growth environment, the intensity and quality of horticultural lighting, the photoperiodic cycle, and the drought treatment during the reproductive growth period, the increase in the inflorescence dry weight of the cannabis plant, etc. and in the content of secondary metabolites in the inflorescence of the plant has been limited.

### Means to Solve the Problems

In this situation, the present inventor has made extensive and intensive studies with a view toward solving the above-mentioned problems. As a result, it has unexpectedly been found that it is possible to increase the inflorescence dry weight of a short-day plant (such as cannabis plant) or long-day plant each having photoperiodism and the content of secondary metabolites (such as cannabinoids) in the inflorescence of the plant by growing the plant on a hydrophilic film while adjusting the light period to thereby perform a switching between the vegetative growth period and reproductive growth period. Thus, the present invention has been completed.

Specifically, the present invention includes the following embodiments.
1. A plant cultivation system comprising a hydrophilic film and a nutrient fluid retaining means, wherein, in the use of the system, at least a part of the roots of a plant adheres to one surface of the hydrophilic film, a nutrient fluid is disposed to be in contact with the other surface of the hydrophilic film opposite to the film surface to which the plant roots adhere, and a switching between a vegetative growth period and reproductive growth period of the plant is performed by changing a light period.
2. The plant cultivation system according to item 1 above, wherein said hydrophilic film exhibits an electrical conductivity (EC) difference of 4.5 dS/m or less as determined between water and a saline solution, said EC difference being determined by a method comprising contacting the water with the saline solution through said hydrophilic film, and measuring the electrical conductivity of each of the water and the saline solution 4 days (96 hours) after the start of the contact, and calculating the difference in electrical conductivity between the water and the saline solution.
3. The plant cultivation system according to item 1 or 2 above, wherein said hydrophilic film has an equilibrium degree of swelling in the range of from 130 % to less than 300 % as measured in water and has a dry thickness of from 20 µm to less than 150 µm.
4. The plant cultivation system according to any one of items 1 to 3 above, wherein said nutrient fluid retaining means is a hydroponic tank accommodating a nutrient fluid which is disposed to be in contact with the lower surface of the hydrophilic film.
5. The plant cultivation system according to any one of items 1 to 3 above, wherein said nutrient fluid retaining means is a material having a water impermeable surface on or above which said hydrophilic film is disposed, and
   wherein said plant cultivation system further comprises a nutrient fluid feeding means for continuously or intermittently feeding a nutrient fluid to a position between said hydrophilic film and said nutrient fluid retaining means.
6. The plant cultivation system according to any one of items 1 to 5 above, which further comprises at least one member selected from the group consisting of a light shielding means and an illumination means.
7. The plant cultivation system according to any one of items 1 to 6 above, which is used for cultivation of a short-day plant or a long-day plant.
8. A method for cultivating a short-day plant, which comprises:
   (1) providing a plant cultivation system comprising:
      a hydrophilic film for cultivating a plant thereon, and
      a nutrient fluid retaining means disposed to be in contact with one surface of the hydrophilic film opposite to the other surface of the hydrophilic film on which a plant is to be placed,
   (2) placing a short-day plant on the hydrophilic film of said plant cultivation system,
   (3) causing a nutrient fluid to be in contact with the plant through said hydrophilic film,
   (4) performing, in an initial, vegetative growth period, a long-time light irradiation cultivation for 13 hours or more and a continuous dark time cultivation for less than 11 hours, and
   (5) subsequently performing, in a reproductive growth period, a short-time light irradiation cultivation for less than 13 hours and a continuous dark time cultivation for 11 hours or more,
      thereby cultivating the plant on the hydrophilic film.
9. A method for cultivating a long-day plant, which comprises:
   (1) providing a plant cultivation system comprising:
      a hydrophilic film for cultivating a plant thereon, and
      a nutrient fluid retaining means disposed to be in contact with one surface of the hydrophilic film opposite to the other surface of the hydrophilic film on which a plant is to be placed,
   (2) placing a long-day plant on the hydrophilic film of said plant cultivation system,
   (3) causing a nutrient fluid to be in contact with the plant through said hydrophilic film,
   (4) performing every day, in an initial, vegetative growth period, a short-time light irradiation cultivation for less than 13 hours and a continuous dark time cultivation for 11 hours or more, and
   (5) subsequently performing, in a reproductive growth period, a long-time light irradiation cultivation for 13 hours or more and a continuous dark time cultivation for less than 11 hours,
      thereby cultivating the plant on the hydrophilic film.

In the use of the plant cultivation system of the present invention, at least a part of the roots of the plant adheres to one surface of the hydrophilic film, and the nutrient fluid is disposed to be in contact with the other surface of the hydrophilic film opposite to the film surface to which the plant roots adhere. The shape and size of the hydrophilic film are not particularly limited, and the positional relationship among the hydrophilic film, the nutrient fluid retaining means, the plant, and the nutrient fluid during use is not particularly limited; however, in a typical embodiment, a flat hydrophilic film is arranged horizontally, and the plant is arranged on the upper surface of the hydrophilic film. Therefore, in the following description, expressions, such as "on (or on the upper surface of) the film" and "beneath (or beneath the lower surface of) the film", are used assuming this typical embodiment. Of course, the plant cultivation system can also be configured with the hydrophilic film in a tube shape or a bag shape, and in such case, the upper surface of the hydrophilic film can be referred to as the outer surface, and the lower surface of the hydrophilic film can be referred to as the inner surface. Furthermore, the plant can be cultivated with the hydrophilic film arranged vertically on a vertical wall surface. A person skilled in the art can appropriately set the positional relationship among the hydrophilic film, the nutrient fluid retaining means, the plant, and the nutrient fluid during use even in an embodiment other than the typical embodiment.

### Effects of the Invention

According to the present invention, during the cultivation period of a short-day plant or long-day plant each having photoperiodism, the growth mode of the plant can be switched from the vegetative growth period to the reproductive growth period by changing the light period, so that flower buds are formed to promote the formation of inflorescences in which plant secondary metabolites are concentrated. Furthermore, according to the present invention, because the plant absorbs a nutrient fluid through the hydrophilic film, an adequate water stress can be applied to the plant, thereby promoting the production of secondary metabolites which are produced by the plant to counter the stress. As a result of the synergistic effect, the present invention achieves an increase in the dry weight of the inflorescence of the plant and also an increase in the content of secondary metabolites in the inflorescence.

According to the present invention, when a plant absorbs a nutrient fluid through the hydrophilic film, water stress is applied to the plant, which relatively suppresses the vegetative growth for growing leaves and stems and promotes the reproductive growth for leaving offspring, and as a result, reproductive organs, such as flowers, are relatively more likely to grow than leaves and stems. If the leaves grow to a large extent, the amount of photosynthesis is increased, but a large shade is formed, so that it is necessary to reduce the planting density of the plant. According to the present invention, the planting density of the plant can be increased by relatively reducing the areas of the leaves by the water stress. In the present invention, by a synergistic effect with arbitrarily controlling the time of flower bud formation by changing the light period, an increase in both the inflorescence dry weight per unit area and the secondary metabolite content of the inflorescence can be achieved more than expected.

In addition, because the hydrophilic film used in the present invention does not allow bacteria and viruses to pass therethrough and the nutrient fluid comes into contact with the roots of the plant through the hydrophilic film, the plant roots can be caused to absorb satisfactory amounts of nutrient components for a long period of time efficiently and stably while avoiding infection by bacteria and the like causative of plant diseases and also preventing plant roots from suffering oxygen deficiency causative of root rot and the like, thereby rendering it possible to remarkably promote plant growth continually for a long period of time.

### BRIEF DESCRIPTION OF DRAWING

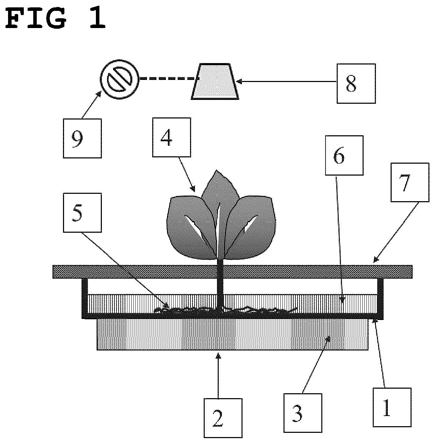

[Fig. 1] A schematic cross-sectional view of an example of a basic embodiment of the plant cultivation system of the present invention.

### DESCRIPTION OF EMBODIMENTS

Hereinbelow, the present invention will be explained more illustratively.

### <Plant cultivation system>

In the plant cultivation system of the present invention, the hydrophilic film and the nutrient fluid retaining means are indispensable. However, depending on the type of the nutrient fluid retaining means, the plant cultivation system of the present invention is roughly classified into 2 types. Type 1 is a plant cultivation system wherein the nutrient fluid retaining means is a hydroponic tank accommodating a nutrient fluid which is disposed to be in contact with the lower surface of the hydrophilic film. With respect to this type of plant cultivation system, reference can be made, for example, to Patent Document 1.

Type 2 is a plant cultivation system wherein the nutrient fluid retaining means is a material having a water impermeable surface on or above which the hydrophilic film is disposed, and wherein the plant cultivation system further comprises a nutrient fluid feeding means for continuously or intermittently feeding a nutrient fluid to a position between the hydrophilic film and the nutrient fluid retaining means. A representative example of the nutrient fluid feeding means is a drip irrigation tube disposed between the hydrophilic film and the nutrient fluid retaining means. That is, Type 2 of plant cultivation system has a multilayer structure wherein the hydrophilic film is directly or indirectly disposed on or above the nutrient fluid retaining means used as a substrate layer. With respect to this type of plant cultivation system, reference can be made, for example, to Patent Document 5.

Fig. 1 is a schematic cross-sectional view of an example of a basic embodiment of Type 1 of plant cultivation system. In the plant cultivation system of Fig. 1, a hydroponic tank (2) accommodating a nutrient fluid (3) containing fertilizer components is disposed below the hydrophilic film (1). The nutrient fluid (3) is absorbed by the hydrophilic film (1). The roots (5) of a plant body (4) adhere to the upper surface of the hydrophilic film (1) and are allowed to absorb the water and fertilizer components contained in the hydrophilic film (1). A light source (8) is disposed above the plant body (4). Disposed between the light source and a power supply is a timer controller (9) for turning on and off the light source at any time.

If desired, a plant cultivation support (6) (such as soil) and/or an evaporation suppression material (e.g., the below-mentioned mulching material) (which is either impervious or semi-pervious to water vapor) or a planting plate (7) may be disposed on or above the hydrophilic film (1). By disposing a plant cultivation support (6) on or above the hydrophilic film (1), the effect of protecting plant roots can be achieved. In addition, the use of an evaporation suppression material or planting plate (7) enables water vapor evaporating from the hydrophilic film (1) into the atmosphere to be condensed on the surface of the evaporation suppression material or inside the plant cultivation support (6), thereby allowing the plant to utilize the water condensed from the water vapor.

In the use of the plant cultivation system of the present invention, the nutrient fluid (3) containing fertilizer components is fed to the plant through the hydrophilic film (1). On the other hand, in conventional hydroponic cultivation methods in which plant roots are immersed in water (or the nutrient fluid), the surface of the water or nutrient fluid is contacted with the atmosphere, so that bacteria and fungi in the atmosphere will easily intrude into the plant and grow in plant roots, thus seriously inhibiting the growth of the plant or causing diseases of the plant.

In conventional hydroponic cultivation methods in which plant roots are immersed in water (or the nutrient fluid), plant roots absorb oxygen dissolved in water, and the amount of oxygen dissolved in the water used for the cultivation of the plant must be maintained at least at a certain level. On the other hand, in the use of the plant cultivation system of the present invention, plant roots are present in the atmosphere above the hydrophilic film (1), so that the plant can satisfactorily and freely absorb oxygen from the atmosphere.

In addition, if desired, a mist spraying means (e.g., a valve) for intermittently spraying water, a nutrient fluid or a diluted agrochemical solution may be provided above the hydrophilic film (1). The use of a mist spraying means is advantageous in that it enables the automation of an intermittent spraying of: water for cooling, especially during summer seasons; a nutrient fluid for cooling the environment and for feeding fertilizer components in the form of a foliar spray; and water or a nutrient fluid containing an agrochemical for agrochemical spraying.

The hydrophilic film (1) has the property that at least a part of the plant roots adheres to the surface of the hydrophilic film. Therefore, it is considered that when the film is used, the molecules of the water and/or fertilizer supplied can diffuse through the hydrophilic film (1) and migrate to the roots of the plant. As described below, when this adhesion is strong, the roots of the plant and the hydrophilic film (1) become substantially integrated with each other.

In the use of a preferred embodiment of the plant cultivation system of the present invention, roots of the plant cultivated on the hydrophilic film (1), in seeking to absorb a nutrient fluid through the hydrophilic film (1), will be substantially integrated with the hydrophilic film (1). For promoting the "integration" of the roots with the hydrophilic film (1), it is preferred to feed a nutrient fluid to the lower surface of the film (1).

The feeding of a nutrient to the lower surface of the hydrophilic film (1) greatly improves not only the growth of the plant but also the adhesion strength of the roots to the hydrophilic film (1), as compared to the case where only water is fed to the lower surface of the hydrophilic film (1). This shows that the plant absorbs through the film not only water but also fertilizer components. Further, it is considered that, in order to efficiently absorb water and fertilizer components through the film, the roots need to strongly and tightly adhere to the surface of the film, and that the strong and tight adhesion causes the integration of the roots with the film.

When an excess amount of water is fed to the upper side of the hydrophilic film (1) before the completion of the "integration" of the roots and the film, the plant absorbs water from the upper side of the film which is easier to absorb, thus reducing the necessity of absorbing water from the lower side of the film. As a result, the integration of the roots with the film tends to become difficult. Therefore, until the roots have been integrated with the film, it is preferred to refrain from feeding an excess amount of water to the upper side of the film. On the other hand, after the integration of the roots with the hydrophilic film (1), the water/nutrient fluid may be fed to the upper side of the film when appropriate.

### <Features of parts of the plant cultivation system>

Hereinbelow, explanation is made on the features of parts of the plant cultivation system of the present invention. With respect to such features (or functions), if necessary, reference can be made to the "Detailed description of the invention" and "Examples" of the documents (Patent Documents 1 to 6) by the present inventor and his colleagues.

### (Hydrophilic film used in the present invention)

In the plant cultivation system of the present invention, the hydrophilic film for cultivating a plant thereon is indispensable. In the present invention, film materials which can be used are not particularly limited and can be appropriately selected from known materials. Such materials can usually be used in the form of a film or a membrane.

More specifically, as such film materials, there can be employed, for example, hydrophilic materials, such as polyvinyl alcohol (PVA), cellophane, cellulose acetate, cellulose nitrate, ethyl cellulose, and polyester.

The thickness of the film (the thickness means the dry thickness; the same shall apply hereinafter) is not particularly limited, but it is usually about 300 µm or less, preferably from about 200 µm to about 5 um, and more preferably from about 100 µm to about 20 µm.

When the thickness of the film exceeds the preferred range, the permeation of the fertilizer components of the nutrient fluid is slowed down and the growth of the plant is inhibited. On the other hand, when the thickness of the film is less than the preferred range, the strength of the film is unsatisfactory and the roots of the plant are likely to penetrate the film, which is not preferred.

The hydrophilic film used in the present invention preferably has a property of absorbing water in water and swelling. It is preferred that the hydrophilic film used in the present invention has an equilibrium degree of swelling in the range of from 130 % to 300 %, more advantageously from 150 to 250 %, as measured in water at 30 °C.

When the equilibrium degree of swelling of the hydrophilic film is less than the lower limit of the above-mentioned range, the permeation of water and fertilizer components through the hydrophilic film becomes unsatisfactory, thus retarding the growth rate of a plant. On the other hand, when the equilibrium degree of swelling of the hydrophilic film is more than the upper limit of the above-mentioned range, the strength of the hydrophilic film in water is lowered, so that the hydrophilic film is unlikely to resist penetration by plant roots.

The equilibrium degree of swelling of the hydrophilic film in water at 30 °C is measured as follows. First, a hydrophilic film having a square shape of 20 cm × 20 cm is cut out from a hydrophilic film in dry state, and its weight (a) (in the unit g) is measured. Next, the cut-out hydrophilic film is immersed and left in water at 30 °C for 30 minutes. Subsequently, the hydrophilic film is taken out from the water, excess water on the surface of the hydrophilic film is quickly wiped off, and the weight (b) (in the unit g) of the hydrophilic film is measured. The equilibrium degree of swelling is calculated by the formula: b/a × 100 %.

The hydrophilic film may or may not be non-porous, but it is preferably non-porous.

### (Integration test)

It is preferred that the hydrophilic film used in the plant cultivation system of the present invention is "capable of substantially integrating with the plant roots". In the present invention, a hydrophilic film which is "capable of substantially integrating with the plant roots" means a hydrophilic film which exhibits a peeling strength of 10 g or more with respect to the roots of the plant having been cultivated thereon for 35 days. The "integration test" for measuring the degree of the integration of the film with the plant roots is performed as follows.

The measurement is performed using a "sieve basket-bowl set". The sieve basket-bowl set comprises a sieve basket and a bowl, wherein the sieve basket is accommodated in the bowl. The film to be tested (size: 200 mm × 200 mm) is placed on the sieve basket of the sieve basket-bowl set, 150 g of vermiculite (water content: 73 %; dry weight: 40 g) is placed on the film on the sieve basket, and two sunny lettuce seedlings (each having at least 1 true leaf) are planted onto the vermiculite. On the other hand, 240 to 300 g of a nutrient fluid is fed to the bowl of the sieve basket-bowl set. The sieve basket containing the film is accommodated in the bowl so that the film is contacted with the nutrient fluid to thereby start cultivating the sunny lettuce seedlings. The cultivation is performed in a greenhouse for 35 days under conditions wherein the temperature is 0 to 25 °C, the humidity is 50 to 90 % RH, and natural sunlight is used. The thus cultivated plants are removed from the film by cutting the stems and leaves near the roots of the plants. Test specimens each having a width of 5 cm (and a length of about 20 cm) and having the roots adhered thereto are cut out from the film so that the stem of the plant is positioned at the center of each test specimen.

A commercially available clip is attached to a hook hanging from the spring of a spring type balance, and one end of the test specimen obtained above is gripped by the clip, followed by recording the weight (A grams) (corresponding to the tare weight of the test specimen) indicated by the spring type balance. Subsequently, the stem of the plant at the center of the test specimen is held by hand and gently pulled downward to detach (or break away) the roots from the film, while recording the weight (B grams) (corresponding to the applied load) indicated by the spring type balance. The tare weight is subtracted from this value (that is, B grams minus A grams) to thereby obtain a peeling load for a width of 5 cm. This peeling load is designated as the peeling strength of the film.

The peeling strength of the hydrophilic film used in the present invention is preferably 10 g or more, more preferably 30 g or more, and especially preferably 100 g or more.

### (Ion permeability test)

In the present invention, as a yardstick for determining whether or not the hydrophilic film is "capable of substantially integrating with plant roots", there can be mentioned an ion permeability balance.

When a plant is cultivated using the plant cultivation system of the present invention, the plant absorbs a fertilizer in the form of ions through the film. Therefore, the amount of fertilizer components fed to the plant is influenced by the salt (ion) permeability of the film. It is preferred to use a hydrophilic film having an ion permeability of 4.5 dS/m or less in terms of an electrical conductivity (EC) difference in a water/saline solution system. The EC difference is determined by contacting water with a 0.5 mass % saline solution through the film (wherein the water and the saline solution are placed in separate compartments which are partitioned by the film), and measuring the EC of each of the water and the saline solution 4 days (96 hours) after the start of the contact, and calculating the difference in EC between the water and the saline solution.

The electrical conductivity (EC) difference in a water/saline solution system is more preferably 3.5 dS/m or less, especially preferably 2.0 dS/m or less. The use of such a film enables an adequate feeding of water or a fertilizer solution to the roots, thereby easily promoting the integration of the roots with the film.

The electrical conductivity (EC) difference in a water/saline solution system is more preferably 3.5 dS/m or less, especially preferably 2.0 dS/m or less. The use of such a film enables an adequate feeding of water or a fertilizer solution to the roots, thereby easily promoting the integration of the roots with the film.

The electrical conductivity (EC) is a yardstick for the amount of salts (or ions) dissolved in a solution, and is also called "specific conductivity". The EC represents an electrical conductivity between two electrodes, each having a cross-sectional area of 1 cm², which are separated at a distance of 1 cm from each other. The unit used is siemens (S), and the EC value of a solution is expressed in terms of S/cm. However, since the EC of a fertilizer solution is small, unit "mS/cm" (which is 1/1000 of S/cm) is used in the present specification (unit used in accordance with the International System of Units is dS/m, wherein d represents "deci-").

The ion permeability of the film can be measured as follows. Ten (10) grams of a commercially available table salt is dissolved in 2000 ml of water to prepare a 0.5 % saline solution (EC: about 9 dS/m). The measurement is performed using a "sieve basket-bowl set". The sieve basket-bowl set comprises a sieve basket and a bowl, wherein the sieve basket is accommodated in the bowl. The film to be tested (size: 200 to 260 mm × 200 to 260 mm) is placed on the sieve basket of the sieve basket-bowl set, and 150 g of water is poured onto the film on the sieve basket. On the other hand, 150 g of the saline solution prepared above is placed in the bowl of the sieve basket-bowl set. The sieve basket containing the film and water is accommodated in the bowl containing the saline solution, and the whole of the resultant system is wrapped with a resin film for wrapping food (a polyvinylidene chloride film, trade name: Saran Wrap (registered trademark), manufactured and sold by Asahi Kasei Corporation) to prevent the evaporation of water from the system. The resultant system is allowed to stand still at room temperature, and the EC values of the water and the saline solution are measured every 24 hours. More specifically, a small amount of a sample (i.e., the water or the saline solution) is placed, using a dropper, on a measuring portion (sensor portion) of an electrical conductivity meter for measuring the electrical conductivity defined above, to thereby measure the electrical conductivity of the sample.

### (Water/glucose solution permeability test)

In the present invention, for facilitating the absorption of nutrient (organic matter) by plant roots through the hydrophilic film, it is preferred that the hydrophilic film also exhibits a specific level of glucose permeability. It is preferred that the hydrophilic film having such an excellent glucose permeability exhibits a Brix concentration (%) difference of 4 or less as determined between water and a 5 % aqueous glucose solution at the cultivation temperature, wherein the Brix concentration (%) difference is determined by a method comprising contacting water with the glucose solution through the film (wherein the water and the glucose solution are placed in separate compartments which are partitioned by the film), measuring the Brix concentration (%) of each of the water and the glucose solution three days (72 hours) after the start of the contact, and calculating the difference in Brix concentration (%) between the water and the glucose solution. The Brix concentration (%) difference is more preferably 3 or less, still more preferably 2 or less, especially preferably 1.5 or less.

The glucose solution permeability of the film can be measured as follows.

A 5 % glucose solution is prepared using a commercially available glucose (dextrose). A "sieve basket-bowl set" which is the same as that used in the above-mentioned ion permeability test is used. The hydrophilic film to be tested (size: 200 to 260 mm × 200 to 260 mm) is placed in the sieve basket of the sieve basket-bowl set, and 150 g of water is poured onto the film. On the other hand, 150 g of the glucose solution prepared above is placed in the bowl of the sieve basket-bowl set. The sieve basket containing the film and water is accommodated in the bowl containing the glucose solution, and the whole of the resultant system is wrapped with a resin film for wrapping food (a polyvinylidene chloride film, trade name: Saran Wrap (registered trademark), manufactured and sold by Asahi Kasei Corporation) to prevent the evaporation of water from the system. The resultant system is allowed to stand still at room temperature, and the sugar contents (Brix concentration (%)) of the water and the glucose solution are measured every 24 hours using a Brix meter.

### (Water pressure resistance)

In the present invention, it is preferred that the hydrophilic film has a water impermeability of 10 cm or more, in terms of water pressure resistance. This is because the use of such a hydrophilic film promotes the integration of the roots with the film. Further, the use of such a hydrophilic film is advantageous for easily providing sufficient oxygen supply to the roots and for preventing the contamination by pathogenic bacteria.

The water pressure resistance of a film can be measured according to JIS L1092 (method B). It is preferred that the water pressure resistance of the hydrophilic film used in the present invention is 10 cm or more, more advantageously 20 cm or more, still more advantageously 30 cm or more, and especially advantageously 200 cm or more.

### <Plant cultivation support>

In the plant cultivation system of the present invention, to protect the plant roots, a plant cultivation support (such as soil) can be disposed on the hydrophilic film. With respect to the plant cultivation support, there is no particular limitation. Any of conventional soils or culture media can be used. As such soils or culture media, there can be mentioned, for example, a soil for use in soil cultivation and a culture medium for use in hydroponic cultivation.

Examples of inorganic materials usable as the plant cultivation support include natural materials, such as sand, gravel and pumice sand; and processed materials (e.g., a high temperature calcination product), such as a rock fiber, vermiculite, perlite, ceramics and a carbonized rice hull. Examples of organic materials usable as the plant cultivation support include natural materials, such as peat moss, coconut fiber, bark medium, hull, peat (Nitan) and peat grass (Sotan); and synthetic materials, such as particulate phenol resin. The above-mentioned materials can be used individually or in any combination. Further, woven or nonwoven fabrics made of synthetic fibers can also be used.

To the cultivation support explained above, a minimum required amount of a nutrient (e.g., a fertilizer and micronutrient components) may be added. With respect to such a nutrient added to the cultivation support, according to the finding of the present inventor and his colleagues, it is preferred to add a nutrient to the plant cultivation support on the hydrophilic film in such an amount as required until the roots of a plant grows to a degree such that the plant is capable of absorbing water or a nutrient fluid through the hydrophilic film, in other words, until the roots integrate with the film.

### <Nutrient fluid retaining means>

The plant cultivation system of the present invention comprises a nutrient fluid retaining means for holding a nutrient fluid below the hydrophilic film. As the nutrient fluid retaining means, there can be used one having the shape of a container for accommodating a nutrient fluid, and a nutrient fluid retaining layer having a water impermeable surface and functioning as a substrate.

With respect to the nutrient fluid retaining means having the shape of a container for accommodating a nutrient fluid, there is no particular limitation so long as it is a container capable of retaining a desired amount of the nutrient fluid. As the material for the nutrient fluid retaining means, from the viewpoint of weight saving, easy molding and cost savings, there can be advantageously used general purpose plastics, such as polystyrene, polypropylene, polyvinyl chloride, polyethylene and polyacrylate. For example, conventional hydroponic tanks can be used.

With respect to the water impermeable surface of the nutrient fluid retaining layer, there is no particular limitation so long as it is made of a water impermeable material. Examples of such materials include synthetic resins, wood, metals and ceramics. With respect also to the shape of the nutrient fluid retaining layer, there is no particular limitation. For example, the nutrient fluid retaining layer may be in the form of a film, a sheet, a plate or a box.

With respect to the nutrient fluid feeding means, there is no particular limitation so long as it is conventionally used for continuous or intermittent feeding of water or a nutrient fluid. In the present invention, it is preferred to use a drip irrigation tube (also called "drip tube"), which is capable of feeding a nutrient fluid bit by bit. By the drip irrigation using a drip irrigation tube, it becomes possible to feed water and fertilizers in a minimum amount necessary for the growth of the plant.

Also, in the embodiment in which the plant cultivation system comprises both a nutrient fluid retaining layer and a nutrient fluid feeding means, a water absorbing material can be disposed between the hydrophilic film and the water impermeable surface of the nutrient fluid retaining layer in order to assist the feeding of the nutrient fluid to the hydrophilic film. With respect to the water absorbing material, there is basically no particular limitation so long as it is capable of absorbing and retaining water therein. For example, use can be made of a sponge or nonwoven fabric made of a synthetic resin; a woven fabric; fibers, chips and powder of plant origin; and other materials generally used as a plant cultivation support, such as peat moss and moss.

### <Light shielding means and illumination means>

The plant cultivation system of the present invention may include at least one member selected from the group consisting of a light shielding means and an illumination means.

The light shielding means is not limited so long as it is capable of shielding the light irradiated to the plant. A light shielding curtain or the like can be used as the light shielding means. A darkroom itself may be used as the light shielding means.

The illumination means is also not particularly limited. As the illumination means, an illumination means using sunlight or artificial light as a light source can be used. As the illumination means, a plurality of illumination means may be used at the same time.

The plant cultivation system of the present invention can be used for the cultivation of a short-day plant or long-day plant each having photoperiodism. As described below, light irradiation to the plant is light irradiation by artificial light, sunlight, or a combination thereof.

### <Light Sources>

In the cultivation system of the present invention, there is no limitation on the type of light source to be used during the vegetative growth period of a short-day plant or long-day plant, and either artificial light or sunlight can be used. Artificial light and sunlight may also be used in combination. As light sources for artificial light, incandescent lamps, fluorescent lamps, sodium lamps, halogen lamps, LED's, organic EL and the like can be used. When sunlight is used, the plant may be irradiated with sunlight taken in through an optical fiber cable or the like.

In the cultivation system of the present invention, the light sources for use during the reproductive growth period of the short-day plant or long-day plant may be the same as the above-mentioned light sources for use during the vegetative growth period (artificial light, sunlight, or a combination thereof), or may be provided separately from the light sources for use during the vegetative growth period. When the light sources for use during the reproductive growth period of the short-day plant or long-day plant are provided separately from the light sources for use during the vegetative growth period, artificial light sources are preferred, and light sources, such as incandescent lamps, fluorescent lamps, sodium lamps, halogen lamps, LED's, and organic EL can be used.

In the cultivation system of the present invention, switching between the vegetative growth and reproductive growth of a short-day plant or long-day plant is performed by changing the light period. In the present invention, the term "changing the light period" is also referred to as "changing the irradiation time cycle of light from the light source", and is used in a broad sense, and means to change the length of light irradiation, light time, or dark time (especially, continuous dark time) in one day. The "dark time" means the time when the amount of light described below is less than 4 µmol/m²/sec. The "light time" means the time which is not the "dark time". The "light time" is also referred to as the "light period" or "photoperiod", and the "dark time" is also referred to as the "dark period". The "light time" and the "light irradiation time" have the same meaning.

As described below, in the case of a short-day plant, the formation of flower buds occurs or is promoted under photoperiodic cycle conditions such that the duration of continuous dark time is longer than the critical dark period. Therefore, in the case of a short-day plant, the period at and after the point when the duration of continuous dark time is longer than the critical dark period is regarded as the period of reproductive growth, and the period before that point is regarded as the period of vegetative growth. Further, as described below, in the case of a long-day plant, the formation of flower buds occurs or is promoted under photoperiodic cycle conditions such that the duration of continuous dark time is shorter than the critical dark period. Therefore, in the case of a long-day plant, the period at and after the point when the duration of continuous dark time is shorter than the critical dark period is regarded as the period of reproductive growth, and the period before that point is regarded as the period of vegetative growth.

When the cultivation of a short-day plant or long-day plant is to be performed using sunlight, it is possible to cultivate the plant in any season by adjusting the length of the light irradiation time using a light shielding means or using, in addition to sunlight, artificial light as necessary. For example, in the case of a short-day plant, flowering is promoted by changing the continuous light irradiation time from a long time to a short time (thereby changing the continuous dark time from a short time to a long time) by using a light shielding means as necessary. On the other hand, in the case of a long-day plant, flowering is promoted by changing the continuous light irradiation time from a short time to a long time (thereby changing the continuous dark time from a long time to a short time) by using, in addition to sunlight, artificial light as necessary.

The light irradiation time cycle is based on one day (24 hours), but this one day does not have to be 24 hours from 0:00 a.m. to 12:00 p.m., and may be 24 hours starting from any time.

In the cultivation system of the present invention, from the viewpoint of allowing the plant to satisfactorily perform photosynthesis, it is desirable that the light irradiation time be as long as possible for both the vegetative growth period and the reproductive growth period. However, in the case of a short-day plant or long-day plant each having photoperiodism, priority is given to adapting the light irradiation time to the photoperiodism.

In the case of a short-day plant, flower bud formation occurs or is promoted under photoperiodic cycle conditions such that the duration of continuous dark period is longer than a certain amount of time (the critical dark period). Simply having the dark period be longer than the light period is not effective, and a certain amount or more of continuous dark period is necessary. Therefore, even if the dark period is very long, it is not effective once it is interrupted by light irradiation.

The duration of a continuous dark period which promotes flowering in a short-day plant is usually 11 hours or more, but in some plants, such as cocklebur, flowering is induced when a continuous dark period of 8.5 hours or more is given. Because the critical dark period varies depending on the type of plant among the short-day plants, it is desirable to set the light irradiation time cycle appropriately according to the critical dark period of the plant.

Examples of short-day plants include the cannabis plant, chrysanthemum, rice, soybean, cosmos, perilla, morning glory, goosefoot, cocklebur, duckweed, etc. In Japan, many short-day plants bloom from summer to autumn.

For example, in the case of the cannabis plant, a light cycle of a long-time (continuous 18 hours) light cultivation and a short-time (continuous 6 hours) dark cultivation at the beginning of cultivation results in vegetative growth, but when this light cycle is switched to a light cycle of a short-time (continuous 12 hours) light cultivation and a long-time (continuous 12 hours) dark cultivation, switching to reproductive growth (flowering period) is promoted.

There is no particular limitation on the cannabis plant (Cannabis sativa) targeted by the present invention, and various varieties of the cannabis plant can be used. Examples of cannabis varieties include sativa (*Cannabis sativa* var. *sativa*), indica (*Cannabis sativa* var. *indica*), and ruderalis (*Cannabis sativa* var. *ruderalis*), and a hybrid of these varieties may also be used. In the classification based on chemical phenotypes of secondary metabolites, there are Type I in which production of tetrahydrocannabinol (THC) is predominant, Type II in which production of cannabidiol (CBD) and THC is equivalent, Type III in which production of CBD is predominant, and Type IV in which production of cannabigerol (CBG) is predominant, and any type can be cultivated without limitation.

In the present invention, the form of a short-day plant (such as the cannabis plant) or long-day plant at the start of its cultivation may be any of seeds, cuttings, seedlings and saplings. The plant may be grown from seeds or cuttings to seedlings or saplings in advance, or from a tissue culture to seedlings or saplings, and then transplanted to the film.

In the case of a long-day plant, flower bud formation occurs or is promoted under photoperiodic cycle conditions such that the duration of continuous dark period is shorter than a certain amount of time (the critical dark period). When the duration of continuous dark period is satisfactorily short, flower bud formation occurs or is promoted irrespective of the duration of light period. When a long dark period experiences light interruption, flower bud formation is observed.

Long-day plants generally form flower buds in nature as the day length becomes longer. Many long-day plants often require a period of cold season before photoperiodic cycle conditions (long days) are established.

Examples of long-day plants include petunia, snapdragon, stock, prairie gentian, fuchsia, field mustard, and Japanese white radish. In Japan, many long-day plants bloom from winter to spring. Common wall cress, whose entire genome sequence has been decoded and which is widely used as a model plant for research around the world, is also known as a long-day plant.

When sunlight is used as a light source, the amount of sunlight varies depending on the season and weather, but there is no particular limitation on the amount of light. The amount of light in fine weather is about 2000 µmol/m²/sec, and the amount of light in cloudy weather is from about 50 µmol/m²/sec to about 100 µmol/m²/sec. For example, in cloudy weather, artificial light may be simultaneously used as necessary, and the total light amount of sunlight and artificial light may be set to the usual range, preferred range, or more preferred range of the amount of light described below for the case where only artificial light is used as a light source. In the present invention, the amount of light means the intensity of light irradiated to the plant on the leaf surfaces expressed in terms of photosynthetic photon flux density (PPFD).

When only artificial light is used as a source of light, the amount of light is usually in the range of from 100 µmol/m²/sec to 2000 µmol/m²/sec, preferably in the range of from 200 µmol/m²/sec to 1000 µmol/m²/sec, and more preferably in the range of from 300 µmol/m²/sec to 500 µmol/m²/sec, both in the vegetative growth period and in the reproductive growth period.

When the light source is artificial light, the above-described change of the light irradiation cycle can be easily performed by turning on and off the light source power supply by a timer. In the case of sunlight as a light source, dark time can be arbitrarily set by using a light shielding curtain or the like. In the case of sunlight as a light source, when it is difficult to perform light irradiation for a long time due to the season, light irradiation can be performed for a long time by a combination with artificial light. In this case, the light amount of artificial light may be low, unlike the above-described light amount in the case where only artificial light is used as a light source, and is usually 4 µmol/m²/sec or more, preferably 10 µmol/m²/sec or more, and more preferably 100 µmol/m²/sec or more.

### <Cultivation method>

One example of the short-day plant cultivation method of the present invention is as follows.

A method for cultivating a short-day plant, which comprises:
(1) providing a plant cultivation system comprising:
   a hydrophilic film for cultivating a plant thereon, and
   a nutrient fluid retaining means disposed to be in contact with one surface of the hydrophilic film opposite to the other surface of the hydrophilic film on which a plant is to be placed,
(2) placing a short-day plant on the hydrophilic film of said plant cultivation system,
(3) causing a nutrient fluid to be in contact with the plant through said hydrophilic film,
(4) performing, in an initial, vegetative growth period, a long-time light irradiation cultivation for 13 hours or more and a continuous dark time cultivation for less than 11 hours, and
(5) subsequently performing, in a reproductive growth period, a short-time light irradiation cultivation for less than 13 hours and a continuous dark time cultivation for 11 hours or more,
   thereby cultivating the plant on the hydrophilic film.

In the cultivation of a short-day plant, the duration of the continuous dark time in the vegetative growth period of step (4) is usually from 1 hour to 10 hours, preferably from 3 hours to 9 hours, more preferably from 5 hours to 7 hours.

In the cultivation of a short-day plant, the duration of the continuous dark time in the reproductive growth period of step (5) is usually from 11 hours to 18 hours, preferably from 12 hours to 16 hours, more preferably from 13 hours to 15 hours.

In the cultivation of a short-day plant, the duration of the light irradiation time in the vegetative growth period of step (4) is usually from 13 hours to 23 hours, preferably from 15 hours to 20 hours, more preferably from 16 hours to 18 hours.

In the cultivation of a short-day plant, the duration of the light irradiation time in the reproductive growth period of step (5) is usually from 12 hours to 4 hours, preferably from 11 hours to 6 hours, more preferably from 10 hours to 8 hours.

In the cultivation of a short-day plant, the duration (number of days) of the vegetative growth period in step (4) can be appropriately determined depending on the type of the plant, the form of the plant (seed, seedling, sapling or the like) at the start of the film cultivation, and the like. For example, under conditions such that the film cultivation of the cannabis plant is started in the sapling form as in Example 1 described below, the duration (number of days) of the vegetative growth period is usually from 18 days to 60 days, preferably from 20 days to 50 days, and more preferably from 25 days to 40 days.

In the cultivation of a short-day plant, the duration (number of days) of the reproductive growth period in step (5) can be appropriately determined depending on the type of the plant, the form of the plant (seed, seedling, sapling or the like) at the start of the film cultivation, and the like. For example, under conditions such that the film cultivation of the cannabis plant is started in the sapling form as in Example 1 described below, the duration (number of days) of the reproductive growth period is usually from 45 days to 80 days, preferably from 50 days to 65 days, and more preferably from 55 days to 60 days.

One example of the long-day plant cultivation method of the present invention is as follows.

A method for cultivating a long-day plant, which comprises:
(1) providing a plant cultivation system comprising:
   a hydrophilic film for cultivating a plant thereon, and
   a nutrient fluid retaining means disposed to be in contact with one surface of the hydrophilic film opposite to the other surface of the hydrophilic film on which a plant is to be placed,
(2) placing a long-day plant on the hydrophilic film of said plant cultivation system,
(3) causing a nutrient fluid to be in contact with the plant through said hydrophilic film,
(4) performing every day, in an initial, vegetative growth period, a short-time light irradiation cultivation for less than 13 hours and a continuous dark time cultivation for 11 hours or more, and
(5) subsequently performing, in a reproductive growth period, a long-time light irradiation cultivation for 13 hours or more and a continuous dark time cultivation for less than 11 hours,
   thereby cultivating the plant on the hydrophilic film.

In the cultivation of a long-day plant, the duration of the continuous dark time in the vegetative growth period of step (4) is usually from 11 hours to 23 hours, preferably from 15 hours to 20 hours, more preferably from 16 hours to 18 hours.

In the cultivation of a long-day plant, the duration of the continuous dark time in the reproductive growth period of step (5) is usually from 1 hour to 10 hours, preferably from 3 hours to 9 hours, more preferably from 5 hours to 7 hours.

In the cultivation of a long-day plant, the duration of the light irradiation time in the vegetative growth period of step (4) is usually from 12 hours to 4 hours, preferably from 11 hours to 6 hours, more preferably from 10 hours to 8 hours.

In the cultivation of a long-day plant, the duration of the light irradiation time in the reproductive growth period of step (5) is usually from 13 hours to 18 hours, preferably from 14 hours to 17 hours, more preferably from 15 hours to 16 hours.

In the cultivation of a long-day plant, the duration (number of days) of the vegetative growth period in step (4) can be appropriately determined depending on the type of the plant, the form of the plant (seed, seedling, sapling or the like) at the start of the film cultivation, and the like. For example, under conditions such that the film cultivation of common wall cress is started in the seed form as in Example 3 described below, the duration (number of days) of the vegetative growth period is usually from 9 days to 20 days, preferably from 11 days to 17 days, and more preferably from 13 days to 15 days.

In the cultivation of a long-day plant, the duration (number of days) of the reproductive growth period in step (5) can be appropriately determined depending on the type of the plant, the form of the plant (seed, seedling, sapling or the like) at the start of the film cultivation, and the like. For example, under conditions such that the film cultivation of common wall cress is started in the seed form as in Example 3 described below, the duration (number of days) of the reproductive growth period is usually from 18 days to 42 days, preferably from 21 days to 35 days, and more preferably from 25 days to 30 days.

In both the case of the cultivation of a short-day plant and the case of the cultivation of a long-day plant, the duration of the light irradiation cultivation in each of steps (4) and (5) means the total time of the light irradiation cultivation (that is, the total time of the light irradiation operations when the light irradiation is intermittently performed).

The plant to be cultivated using the plant cultivation system of the present invention can be disposed in the form of seeds, seedlings or saplings on the hydrophilic film having absorbed a nutrient fluid therein. In the case where the plant is disposed in the form of seeds on the hydrophilic film, it is necessary to sprout and root the seeds and, for this purpose, a small amount of irrigation is performed. Since the presence of a large amount of water on the film prevents the integration of the plant roots with the film, the amount of irrigation must be limited to a minimum one necessary for sprouting and rooting the seeds. The minimum required irrigation is usually from 0.01 µL/cm² to 10 µL/cm², preferably from 0.5 µL/cm² to 5 µL/cm², and more preferably from 0.1 µL/cm² to 1 µL/cm².

On the other hand, in the case where the plant is disposed in the form of seedlings or saplings on the hydrophilic film, there is no need of irrigation for sprouting or rooting. However, the neighborhood of the plant roots must be kept wet to prevent the drying of the plant roots until the plant roots extend and integrate with the film so as to be capable of absorbing water and nutrient components from the film.

It is preferred that a plant cultivation support having high water retention characteristics is disposed on the film, since the neighborhood of the plant roots can be easily kept wet while preventing a large amount of water from being present on the film.

Hereinbelow, the present invention will be explained in more detail by making reference to the following Examples.

### EXAMPLES

### Example 1

1.5 liters of a nutrient fluid was placed in a black polypropylene tray having a length of 32 cm, a width of 24 cm and a depth of 4 cm, and a polyvinyl alcohol film (manufactured and sold by Mebiol Inc., Japan) having a length of 40 cm, a width of 29 cm and a thickness of 90 µm was placed thereon. The equilibrium degree of swelling of the film as measured in water at 30 °C was 194 %. The nutrient fluid was one obtained by adding 2 mL/L of a calcium-magnesium supplement (3.0Ca-1.6Mg; EZ-GRO Inc., Canada) to a liquid organic fertilizer "Nutri Plus Organic Grow" (4.0N-1.3P-1.7K; EZ-GRO Inc., Canada) and diluting the resultant mixture with pure water to a nitrogen concentration of 389 mg/L. The concentrations (mg/L) of trace elements in the nutrient fluid were 14.5 Zn, 12.0 B, 2.6 Mo, 2.1 Cu and 8.5 Fe.

The hydrophilic film was allowed to absorb the nutrient fluid and swell at 24 °C for 30 minutes, and then about 500 mL of pH-adjusted peat moss (pH: about 5 to about 6) was placed on the swollen film and spread to a thickness of about 1 cm. Rooted cannabis plant saplings (chemical phenotype II, a height of about 10 cm, 6 true leaves) obtained by vegetative growth of cannabis plant cuttings for 14 days, were transplanted onto the swollen film so that the plant roots were in contact with the film, and then the same nutrient fluid was sprayed thereon so that the peat moss was in wet state.

The cannabis plant saplings were cultivated in a room at a temperature of 24 °C and a relative humidity of 73 % for 4 weeks (a vegetative growth period) with a cycle of a continuous 18-hour light irradiation time with a plant LED at a leaf surface light intensity of 400 µmol/m²/sec and a continuous 6-hour dark period. The nutrient fluid on the lower surface of the film was replenished as necessary so that it would not be lost during the cultivation period. During the cultivation, carbon dioxide was introduced into the room to maintain the carbon dioxide concentration at about 700 ppm to promote photosynthesis.

After 4 weeks of cultivation under the above-mentioned conditions, the plants were further cultivated in a room at a temperature of 22 °C, a relative humidity of 60 %, and a carbon dioxide concentration of about 700 ppm for 8 weeks (flowering period) by switching to a cycle of a continuous 12-hour light irradiation time with a plant LED at a leaf surface light intensity of 400 µmol/m²/sec and a continuous 12-hour dark period. In the cultivation system of the present invention, since the leaf area is small, the cultivation was able to be performed at a cannabis plant cultivation density of 12 plants/m² (square meter) during the flowering period.

After the above-described cultivation, the stems were cut just above the culture soil (peat moss). The larger leaves were removed from the stems and the plants were dried at 18 °C and a relative humidity of 45 % for 2 days and then aged at 18 °C and a relative humidity of 57 % for 12 days. The inflorescences were then cut from the branches (both shoot apices and axillary branches) and the leaves protruding from the inflorescences were trimmed using a Twister T4 mechanical trimming machine (Keirton Inc., Surrey, BC, Canada) prior to determining the inflorescence dry weight.

Analysis of neutral cannabinoids THC, CBD and cannabigerol (CBG), as well as their acid forms THCA, CBDA and cannabigerolic acid (CBGA), was performed by high-performance liquid chromatography (Nexera X3, manufactured and sold by Shimadzu Corporation, Japan). The water content of the dry inflorescence was determined using the method described in Article 921 of the United States Pharmacopeia Convention, Method 3 (United States Pharmacopeia and National Formulary, 2017), and the cannabinoid concentration was calculated in accordance with the correction of the water content of the dry inflorescence to 0 % (hereinafter, all units of water content are % by weight). The cannabinoid yield was calculated as the cannabinoid concentration multiplied by the inflorescence dry weight, wherein the value expressed in per unit area (g/m²) was calculated in accordance with the correction of the water content of the dry inflorescence to 0 %.

The dry inflorescence weight was 300 g/m² and the water content was 9 %. Therefore, when the water content was corrected to 0 %, the dry inflorescence weight was calculated to be 273 g/m². The contents of THC, CBD, CBG, THCA, CBDA and CBGA in the dry inflorescence were 0.5 %, 0.3 %, 0.1 %, 5.5 %, 10.5 % and 0.5 %, respectively. Therefore, the yields per unit area of cannabinoids THC, CBD, CBG, THCA, CBDA and CBGA were 1.4 g/m², 0.8 g/m², 0.3 g/m², 15 g/m², 29 g/m² and 1.4 g/m², respectively.

### Example 2

A cultivation test was performed in substantially the same manner as in Example 1, except that a polyvinyl alcohol film (manufactured and sold by Mebiol Inc., Japan) having an equilibrium degree of swelling of 160 % as measured in water at 30 °C and a thickness of 60 µm was used. The cultivation density of the cannabis plants during the flowering period was 12 plants/m² (square meter), which was the same as in Example 1.

The dry inflorescence weight was 255 g/m² and the water content was 10 %. Therefore, when the water content was corrected to 0 %, the dry inflorescence weight was calculated to be 230 g/m². The contents of THC, CBD, CBG, THCA, CBDA and CBGA in the dry inflorescence were 0.6 %, 0.4 %, 0.2 %, 5.9 %, 10.8 % and 0.6 %, respectively. Therefore, the yields per unit area of cannabinoids THC, CBD, CBG, THCA, CBDA and CBGA were 1.4 g/m², 0.9 g/m², 0.4 g/m², 14 g/m², 25 g/m² and 1.4 g/m², respectively.

### Comparative Example 1

About 10 liters of the same peat moss as in Example 1 was placed in a black pot (28 cm in diameter x 24 cm in height) having a volume of 11 liters, and the same rooted cannabis plant saplings as in Example 1, i.e., rooted cannabis plant saplings (chemical phenotype II, a height of about 10 cm, 6 true leaves) obtained by vegetative growth of cannabis plant cuttings for 14 days, were transplanted thereto.

The same nutrient fluid as in Example 1 was manually irrigated as necessary to prevent the plants from wilting, and the cannabis plant saplings were cultivated in a room at a temperature of 24 °C and a relative humidity of 73 % for 4 weeks (a vegetative growth period) with a cycle of a continuous 18-hour light irradiation time with a plant LED at a leaf surface light intensity of 400 µmol/m²/sec and a continuous 6-hour dark period. During the cultivation, carbon dioxide was introduced into the room to maintain the carbon dioxide concentration at about 700 ppm to promote photosynthesis.

After 4 weeks of cultivation under the above-mentioned conditions, the plants were further cultivated in a room at a temperature of 22 °C, a relative humidity of 60 %, and a carbon dioxide concentration of about 700 ppm for 8 weeks (flowering period) by switching to a cycle of a continuous 12-hour irradiation with a plant LED at a leaf surface light intensity of 400 µmol/m²/sec and a continuous 12-hour dark period. In the case of a cultivation without using a hydrophilic film, leaves grow to have a large area. Therefore, in order to arrange the plants so that the leaves which would grow do not overlap with each other among the adjacent plants, the cultivation density of cannabis plants had to be held to 6.4 plants/m².

Harvesting and analysis were performed in substantially the same manner as in Example 1. As a result, the dry inflorescence weight was 160 g/m² and the water content was 8 %. Therefore, when the water content was corrected to 0 %, the dry inflorescence weight was calculated to be 147 g/m². The contents of THC, CBD, CBG, THCA, CBDA and CBGA in the dry inflorescence were 0.3 %, 0.2 %, 0.1 %, 4.7 %, 9.0 % and 0.4 %, respectively. Therefore, the yields per unit area of cannabinoids THC, CBD, CBG, THCA, CBDA and CBGA were 0.4 g/m², 0.3 g/m², 0.1 g/m², 6.9 g/m², 13 g/m² and 0.6 g/m², respectively.

### Comparative Example 2

A cannabis plant cultivation was performed in substantially the same manner as in Example 1, except that after the cultivation with the cycle of a continuous 18-hour light irradiation time and a continuous 6-hour dark period for 4 weeks (a vegetative growth period), instead of switching to a cycle of a continuous 12-hour light irradiation time and a continuous 12-hour dark period as in Example 1, the cultivation was performed for 8 weeks at a temperature of 22 °C, a relative humidity of 60 %, and a carbon dioxide concentration of about 700 ppm. As a result, flower bud differentiation was not induced, and satisfactory formation of inflorescences was not observed.

### Example 3

1.5 liters of a nutrient fluid was placed in a black polypropylene tray having a length of 32 cm, a width of 24 cm and a depth of 4 cm, and a polyvinyl alcohol film (manufactured and sold by Mebiol Inc., Japan) having a length of 40 cm, a width of 29 cm and a thickness of 50 µm was placed thereon. The equilibrium degree of swelling of the film as measured in water at 30 °C was 250 %. The nutrient fluid was Murashige and Skoog medium (MS medium) (manufactured and sold by Wako Pure Chemical Industries, Ltd., Japan).

The hydrophilic film was allowed to absorb the nutrient fluid and swell at 22 °C for 30 minutes, and then seeds of common wall cress, known as a long-day plant, were sown thereon and water was sprayed on the seeds. In order to maintain the film carrying the seeds at 100 % humidity until germination, the tray was completely covered with a food wrap (specifically a polyvinylidene chloride film, trade name: Saran Wrap (registered trademark), manufactured and sold by Asahi Kasei Corporation). The seeds on the film were then cultivated for 2 weeks (a vegetative growth period) with a cycle of a continuous 8-hour light irradiation time with a plant LED at a seed surface light intensity of 400 µmol/m²/sec and a continuous 16-hour dark period. The wrap on the tray was gradually removed after the seeds rooted and germinated to acclimatize them to the environment in the cultivation room. The relative humidity in the cultivation room was about 60 % and the carbon dioxide concentration was about 400 ppm.

After the 2 weeks of cultivation under the short-day conditions described above, the cultivation was further continued (long-day treatment) by switching to a cycle of a continuous 16-hour light irradiation time with a plant LED at a seed surface light intensity of 400 µmol/m²/sec and a continuous 8-hour dark period. As a result, common wall cress bloomed in 4 weeks after sowing the seeds.

### Comparative Example 3

Common wall cress was cultivated in substantially the same manner as in Example 3, except that the cycle of a continuous 8-hour light irradiation time and a continuous 16-hour dark period was continued without switching to the cycle of the long-day treatment. As a result, the plant did not exhibit blooming in 4 weeks after sowing the seeds, and it took the plants 8 weeks to bloom.

### INDUSTRIAL APPLICABILITY

When a plant is cultivated using the plant cultivation system of the present invention, which employs a hydrophilic film capable of absorbing water or a nutrient fluid and of applying an appropriate water stress to the plant, infection from various bacteria and the like causative of plant diseases can be avoided, and at the same time, the reproductive growth of the plant can be promoted. In addition, the expansion of the area of the leaves can be relatively suppressed, and therefore the yield of the inflorescences relative to the leaves can be increased.

Further, when the plant cultivation system of the present invention utilizing the photoperiodism of plants is used, flower bud differentiation can be stimulated, so that there can be promoted the formation of inflorescences in which substances useful as pharmaceuticals and the like are accumulated as secondary metabolites.

By the present invention, plant roots can be caused to absorb satisfactory amounts of nutrient components for a long period of time efficiently and stably while preventing plant roots from suffering oxygen deficiency causative of root rot and the like, thereby rendering it possible to remarkably promote plant growth continually for a long period of time. Therefore, the present invention is useful in a wide variety of fields, such as fields involving plant cultivation, for example, agriculture, gardening, and the manufacture of pharmaceuticals.

### Description of Reference Numerals

1. Hydrophilic film used in the present invention
2. Hydroponic tank
3. Nutrient fluid
4. Plant body
5. Roots
6. Plant cultivation support
7. Evaporation suppression material or planting plate
8. Light source
9. Timer controller

## Claims

1. A plant cultivation system comprising a hydrophilic film and a nutrient fluid retaining means, wherein, in the use of the system, at least a part of the roots of a plant adheres to one surface of the hydrophilic film, a nutrient fluid is disposed to be in contact with the other surface of the hydrophilic film opposite to the film surface to which the plant roots adhere, and a switching between a vegetative growth period and reproductive growth period of the plant is performed by changing a light period.

2. The plant cultivation system according to claim 1, wherein said hydrophilic film exhibits an electrical conductivity (EC) difference of 4.5 dS/m or less as determined between water and a saline solution, said EC difference being determined by a method comprising contacting the water with the saline solution through said hydrophilic film, and measuring the electrical conductivity of each of the water and the saline solution 4 days (96 hours) after the start of the contact, and calculating the difference in electrical conductivity between the water and the saline solution.

3. The plant cultivation system according to claim 1 or 2, wherein said hydrophilic film has an equilibrium degree of swelling in the range of from 130 % to less than 300 % as measured in water and has a dry thickness of from 20 µm to less than 150 µm.

4. The plant cultivation system according to any one of claims 1 to 3, wherein said nutrient fluid retaining means is a hydroponic tank accommodating a nutrient fluid which is disposed to be in contact with the lower surface of the hydrophilic film.

5. The plant cultivation system according to any one of claims 1 to 3, wherein said nutrient fluid retaining means is a material having a water impermeable surface on or above which said hydrophilic film is disposed, and
wherein said plant cultivation system further comprises a nutrient fluid feeding means for continuously or intermittently feeding a nutrient fluid to a position between said hydrophilic film and said nutrient fluid retaining means.

6. The plant cultivation system according to any one of claims 1 to 5, which further comprises at least one member selected from the group consisting of a light shielding means and an illumination means.

7. The plant cultivation system according to any one of claims 1 to 6, which is used for cultivation of a short-day plant or a long-day plant.

8. A method for cultivating a short-day plant, which comprises:
(1) providing a plant cultivation system comprising:
a hydrophilic film for cultivating a plant thereon, and
a nutrient fluid retaining means disposed to be in contact with one surface of the hydrophilic film opposite to the other surface of the hydrophilic film on which a plant is to be placed,
(2) placing a short-day plant on the hydrophilic film of said plant cultivation system,
(3) causing a nutrient fluid to be in contact with the plant through said hydrophilic film,
(4) performing, in an initial, vegetative growth period, a long-time light irradiation cultivation for 13 hours or more and a continuous dark time cultivation for less than 11 hours, and
(5) subsequently performing, in a reproductive growth period, a short-time light irradiation cultivation for less than 13 hours and a continuous dark time cultivation for 11 hours or more,
thereby cultivating the plant on the hydrophilic film.

9. A method for cultivating a long-day plant, which comprises:
(1) providing a plant cultivation system comprising:
a hydrophilic film for cultivating a plant thereon, and
a nutrient fluid retaining means disposed to be in contact with one surface of the hydrophilic film opposite to the other surface of the hydrophilic film on which a plant is to be placed,
(2) placing a long-day plant on the hydrophilic film of said plant cultivation system,
(3) causing a nutrient fluid to be in contact with the plant through said hydrophilic film,
(4) performing every day, in an initial, vegetative growth period, a short-time light irradiation cultivation for less than 13 hours and a continuous dark time cultivation for 11 hours or more, and
(5) subsequently performing, in a reproductive growth period, a long-time light irradiation cultivation for 13 hours or more and a continuous dark time cultivation for less than 11 hours,
thereby cultivating the plant on the hydrophilic film.
